# EUROPÄISCHE PATENTSCHRIFT

(11) **EP 0 609 663 B1**
(45) Veröffentlichungstag und Bekanntmachung des Hinweises auf die Patenterteilung: **09.07.1997**
(21) Anmeldenummer: 94100326.1
(22) Anmeldetag: 12.01.1994
(51) Int. Cl.: B62B 3/10

(54) **Einkaufswagen**
Shopping trolley
Chariot d'achats

(30) Priorität: 04.02.1993 DE 4303087
(43) Veröffentlichungstag der Anmeldung: 10.08.1994
(73) Patentinhaber: Brüder Siegel GmbH + Co. KG Draht- und Metallwarenfabrik, D-89340 Leipheim (DE)
(72) Erfinder: Polidar, Franz, D-89331 Burgau (DE); Kugler, Rudolf, D-89343 Jettingen-Scheppach (DE)
(74) Vertreter: Grättinger & Partner

(56) Entgegenhaltungen:
- EP-A- 0 491 595
- DE-A- 3 043 599
- DE-A- 3 444 969

## Beschreibung

Die vorliegende Erfindung betrifft einen Einkaufswagen mit einem Fahrgestell und einem hierauf aufgesetzten Warenbehälter, wobei im hinteren Bereich des Einkaufswagens eine Kistenablage vorgesehen ist, welche zwei feststehende in Längsrichtung versetzt angeordnete Halteelemente für eine Kiste umfaßt, von denen das vordere als Auflage für den Boden und das hintere als Anlage für mindestens eine Wand einer aufzunehmenden Kiste dient, wobei eine Kiste schräg nach hinten geneigt von oben in die Kistenablage einsetzbar ist und eine in die Kistenablage aufgenommene Kiste eine schräg nach hinten geneigte Stellung einnimmt.

Ein derartiger Einkaufswagen ist aus der EP-A-0491595 bekannt. Bei ihm sind die hinteren, als Anlage für die Rückwand der aufzunehmenden Kiste dienenden Halteelemente durch zwei Drahtschlaufen gebildet, von denen jeweils eine seitwärts nach innen von einem Holm des Fahrgestells vorspringt. Die Kistenablage umfaßt darüberhinaus zwei Streben, die parallel zueinander und etwa parallel zu den hinteren Holmen des Fahrgestells schräg nach hinten geneigt verlaufen; diese Streben dienen als Auflage für den Boden einer in der Kistenablage abgestellten Kiste. Nachteilig bei diesem Einkaufswagen ist, daß nur Kisten bestimmter Abmessungen in der Kistenablage transportiert werden können; insbesondere können Kisten, deren Breite geringer ist als der Abstand zwischen den beiden Streben, nicht transportiert werden. Des weiteren benötigt der bekannte Einkaufswagen ein Fahrgestell großer Länge, was dessen Manövrierfähigkeit beeinträchtigt.

Ein weiterer Einkaufswagen mit starrer Kistenablage ist aus der deutschen Patentschrift 30 43 599 bekannt. Bei ihm sind als Halteelemente für die Kiste eine Querstrebe und ein Anschlag vorgesehen. Die Querstrebe, die als Auflage für die in der Kistenablage aufzunehmende Kiste dient, verbindet die Längsseiten des Fahrgestells im rückwärtigen unteren Bereich miteinander; und der Anschlag, welcher gemeinsam mit den seitlichen, den Korb stützenden Trägern als teilweise seitliche Begrenzung für die Kiste dient, ist vor der Querstrebe und auf einer anderen Höhe als diese angeordnet. Die bekannte Kistenablage ist somit nach hinten, entgegengesetzt zur Fahrtrichtung hin offen; eine Kiste wird von hinten her in die Ablage eingeschoben, bis sie am Anschlag anliegt. Dabei befindet sich die Kiste unter dem warenbehälter und nimmt eine nach vorn, in Fahrtrichtung geneigte Lage ein.

Ein Nachteil dieser bekannten Kistenablage besteht darin, daß Flaschen einer in der Kistenablage aufgenommenen Getränkekiste nicht zugänglich sind. Desweiteren ist die bekannte Kistenablage nur bei solchen Einkaufswagen realisierbar, bei denen genügend Raum unter dem Warenbehälter gegeben ist; bei Einkaufswagen mit einem tief heruntergezogenen Warenbehälter kann die bekannte Kistenablage hingegen nicht eingesetzt werden. Auch stellt das Einschieben einer schweren Kiste von hinten her unter den Warenbehälter des Einkaufswagens in gebeugter Stellung eine starke Belastung insbesondere des Rückens der entsprechenden Person dar.

Aus der DE-A-3444969 ist schließlich ein Einkaufswagen bekannt, welche eine Kistenablage aufweist, die eine Gebrauchslage und eine Nichtgebrauchslage einnehmen kann. Hierzu sind am Fahrgestell zwei Führungen vorgesehen, in denen ein Rost der Kistenablage verschoben werden kann. Bei dieser Gestaltung der Kistenablage ist ein Verkanten und somit verklemmen des Rostes in den Führungen im Betrieb nicht ausgeschlossen. Dies würde jedoch die Stapelbarkeit beeinträchtigen.

Der vorliegenden Erfindung liegt die Aufgabe zugrunde, einen gattungsgemäßen Einkaufswagen zu schaffen, bei welchem die vorstehend genannten Nachteile nicht auftreten. Insbesondere soll ein Einkaufswagen geschaffen werden, bei welchem die Flaschen einer in der Kistenablage aufgenommenen Kiste von oben zugänglich sind, wobei die Kistenablage auch bei Einkaufswagen mit einem niedrig angeordneten Warenbehälter einsetzbar sein soll und wobei ferner die Beladung der Kistenablage mit einer schweren Kiste möglichst schonend für den Rücken der entsprechenden Person möglich ist.

Gemäß der vorliegenden Erfindung wird diese Aufgabe dadurch gelöst, daß das hintere Halteelement als die Längsseiten des Fahrgestells verbindender, nach hinten ausgekröpfter Bügel ausgebildet ist, welcher als Anlage für die beiden seitlichen und die hintere Wand der Kiste dient. Durch die Auskröpfung des Bügels wird einerseits erreicht, daß die Kiste relativ weit hinten am Einkaufswagen ruht, was die Beladung der Kistenablage von oben her erheblich vereinfacht. Zudem stellt die Kröpfung des Bügels eine zuverlässige Führung auch unterschiedlich großer Kisten und Sicherung gegen Verrutschen dar. Die in der Kistenablage aufzunehmende Kiste wird nicht von hinten unter den Warenbehälter geschoben, sondern vielmehr von oben her an der Rückwand des Warenbehälters entlang in die Kistenablage eingesetzt. Die Kistenablage kann hierdurch höher angeordnet werden, als dies beim Stand der Technik gemäß der DE-A-3043599 der Fall ist, so daß eine Beladung der Kistenablage mit gestrecktem Rücken möglich ist. Zudem sind Flaschen, welche in einer in die Kistenablage eingesetzten Kiste aufgenommen sind, von oben her zugänglich; sie können somit der in der Kistenablage aufgenommenen Kiste nach oben entnommen werden, beispielsweise an der Kasse. Zudem kann beim Kauf verschiedener Getränke zunächst eine leere Kiste in die Kistenablage eingesetzt werden, welche nach und nach mit verschiedenen Flaschen gefüllt wird. Da sich die Kisten beim erfindungsgemäßen Einkaufswagen unbehindert hinter der Rückwand des Warenbehälters nach oben erstrecken können, lassen sich mit ihm auch dann hohe Kisten befördern, wenn der Warenbehälter relativ niedrig angeordnet ist.

Das vordere, als Auflage für den Boden der Kiste dienende Halteelement kann bevorzugt eine die beiden Längsseiten des Fahrgestells verbindende Querstrebe umfassen. Im Falle einer gerade verlaufenden Querstrebe ist an dieser zweckmäßigerweise ein schräg nach hinten, unten geneigtes Tragelement vorgesehen, welches den Boden der aufzunehmenden Kiste unterstützt. Hierdurch lassen sich Kisten verschiedener Abmessungen transportieren.

Zumindest derjenige Bereich des an der Querstrebe angeordneten Tragelements, der den Boden der Kiste unterstützt, erstreckt sich bevorzugt in einer Ebene, welche in etwa rechtwinklig zur-Rückwand des Warenbehälters des Einkaufswagens verläuft. Hierdurch wird der hinter der Rückwand zur Verfügung stehende Raum optimal genutzt, so daß eine in die Kistenablage eingesetzte Kiste keine Behinderung darstellt.

Ein derartiges Tragelement kann beispielsweise als oberhalb oder unterhalb der Querstrebe auf diese aufgesetzter, offener oder geschlossener Auflagerahmen ausgebildet sein. Alternativ hierzu ist denkbar, daß an der Querstrebe ein Bügel vorgesehen ist, der insbesondere in der Weise abgewinkelt sein kann, daß er sich von der Querstrebe zunächst im wesentlichen nach unten und nach einer Abknickung schräg nach hinten, unten erstreckt; unterschiedlich große Kisten können dann allein auf dem Bügel, auf dem Bügel und der Querstrebe oder allein auf der Querstrebe ruhen und so optimal in der Kistenablage aufgenommen werden. Zudem kann die Querstrebe, wenn die Kiste auf dem Bügel aufsteht, zur Sicherung der Kiste gegen Verrutschen nach vorn dienen. Die Querstrebe kann bei sämtlichen vorstehend skizzierten Varianten eine nach oben gerichtete Auskröpfung aufweisen, die als Anschlag für die aufzunehmende Kiste gegen Verrutschen nach vorn dient.

Anstelle einer gerade verlaufenden Querstrebe kann jedoch auch eine doppelt nach hinten gekröpft ausgebildete vorgesehen sein. In diesem Falle steht die Kiste mit ihrem Boden auf der Kröpfung der Querstrebe auf. Auch hier kann die Kröpfung zunächst nach unten und nach einer Abwinklung schräg nach hinten unten verlaufen, um die Kiste gegen Verrutschen nach vorn zu sichern.

Auch wenn es zur Austeifung des Fahrgestells zweckmäßig ist, daß das vordere Halteelement als die beiden Längsseiten des Fahrgestells miteinander verbindende Querstrebe ausgebildet ist, ist dies jedoch keineswegs zwingend erforderlich. Vielmehr kann das vordere Halteelement auch aus zwei getrennten, jeweils an einer Längsseite des Fahrgestells angeordneten Halteelementsegmenten bestehen. Diese können ggfs. zusätzlich mit dem hinteren, als Anlage dienenden Halteelement verbunden sein.

Bei einem Einkaufswagen, bei dem jede Längsseite des Fahrgestells einen schräg nach vorn, oben verlaufenden Hinterholm und einen schräg nach vorn, unten verlaufenden Vorderholm umfaßt, läßt sich die Erfindung mit besonderem Vorteil anwenden. Denn hier kann die Querstrebe auf einer optimalen Höhe zwischen den beiden Vorderholmen, diese miteinander verbindend vorgesehen sein; und der gekröpft ausgebildete, als Anlage dienende Bügel kann die beiden Hinterholme des Fahrgestells miteinander verbinden. Bevorzugt ist dabei die Querstrebe etwa in der Mitte des Fahrgestells angeordnet.

Im folgenden wird die Erfindung anhand der Zeichnung näher erläutert. Es zeigt
- Fig. 1: eine Ansicht von schräg hinten auf eine erste bevorzugte Ausführungsform und,
- Fig. 2 bis 6: fünf weitere bevorzugte Ausführungsformen des erfindungsgemäßen Einkaufswagens.

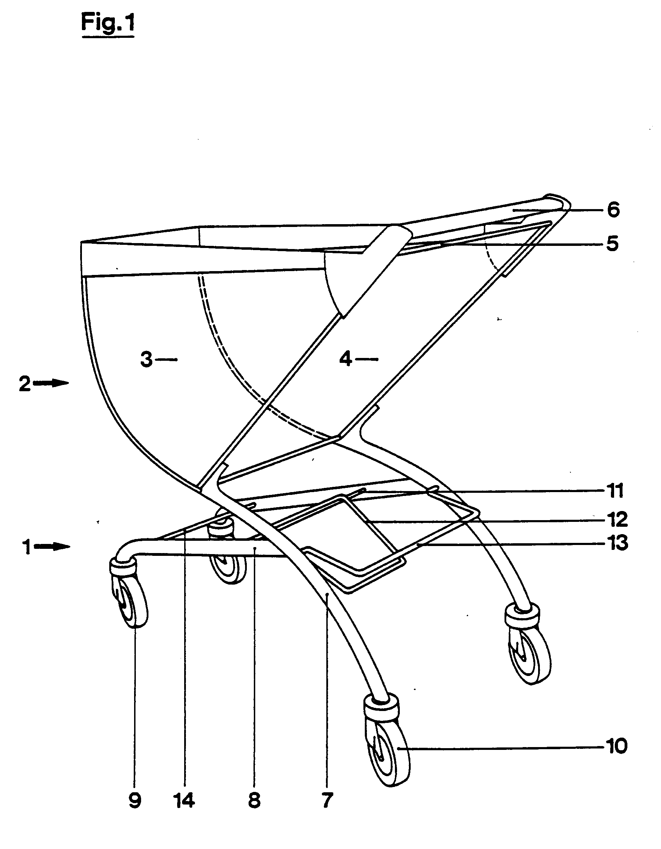

Der in den Fig. 1 bis 6 wiedergegebene Einkaufswagen umfaßt ein Fahrgestell 1, auf das der Warenbehälter 2 aufgesetzt ist. Letzterer umfaßt zwei Seitenwände 3, eine Rückwand 4 sowie einen gekrümmten, in die Vorderwand übergehenden Boden. Die Rückwand 4 des Warenbehälters ist im Bereich ihrer Oberkante 5 um eine horizontale Achse verschwenkbar aufgehängt, so daß sie zum Stapeln mehrerer Einkaufswagen in bekannter Weise nach oben verschwenkt werden kann. Am rückwärtigen oberen Ende des Warenbehälters 2 ist in bekannter Weise eine Griffstange 6 vorgesehen.

Das Fahrgestell 1 umfaßt zwei Längsseiten, von denen jede aus einem schräg nach vorne, oben verlaufenden Hinterholm 7 und einem mit diesem etwa mittig fest verbundenen, schräg nach vorne, unten verlaufenden Vorderholm 8 besteht. Endseitig an den Vorderholmen 8 sind die Vorderräder 9 angeordnet, und endseitig an den Hinterholmen 7 die Hinterräder 10. Der Warenbehälter 2 ist oben an den Hinterholmen 7 aufgehängt.

Gemäß Fig. 1 sind die beiden Vorderholme 8 etwa in der Mitte des Fahrgestells mittels der Querstrebe 11 miteinander verbunden. Auf diese Querstrebe ist oben ein geschlossener, trapezförmiger Auflagerahmen 12 aufgesetzt. Die Ebene, in welcher sich der Auflagerahmen 12 erstreckt, verläuft im wesentlichen senkrecht zu der durch die Rückwand 4 des Warenbehälters definierten Ebene.

Ein zweifach gekröpfter Bügel 13 erstreckt sich zwischen den beiden Hinterholmen 7 und ist mit diesen fest verbunden. Die durch die Kröpfung definierte Ebene verläuft leicht nach hinten, unten geneigt.

Durch die Querstrebe 11 samt Auflagerahmen 12 sowie den Bügel 13 wird eine Kistenablage gebildet, in welche eine Kiste schräg nach hinten geneigt entlang der Rückwand 4 des Warenbehälters 2 von oben her eingesetzt werden kann, bis der Boden der Kiste auf den Auflagerahmen 12 aufsitzt. Die nach hinten weisende Wand der Kiste liegt an dem mittleren Abschnitt des gekröpften Bügels 13 an, während die Seitenwände der Kiste durch die seitlichen Abschnitte des Bügels 13 geführt werden.

Zur Aussteifung des Fahrgestells sind die beiden Vorderholme 8 nahe den Vorderrädern 9 mittels einer weiteren Querstrebe 14 miteinander verbunden.

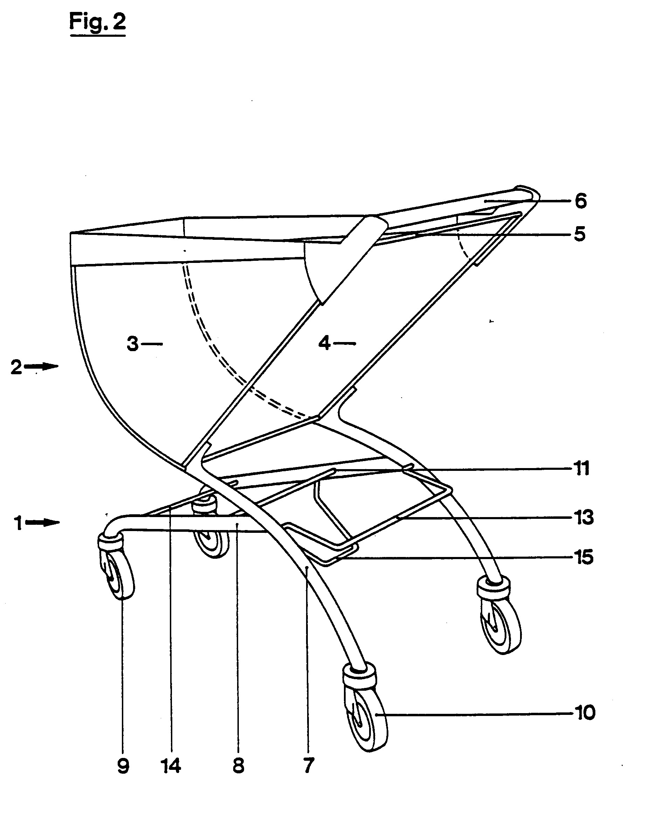

Der Einkaufswagen gemäß Fig. 2 entspricht dem vorstehend beschriebenen gemäß Fig. 1 mit Ausnahme der andersartigen Gestaltung der Auflage für die Kiste. Und zwar ist mit der Querstrebe 11 ein Bügel 15 fest verbunden, der sich zunächst im wesentlichen vertikal nach unten und nach einer Abknickung schräg nach hinten, unten erstreckt. Eine in der Kistenablage aufgenommene Kiste steht i. a. mit ihrem Boden auf dem geneigten Bereich des Bügels auf; durch die Querstrebe 11 ist sie daran gehindert, nach vorne zu verrutschen.

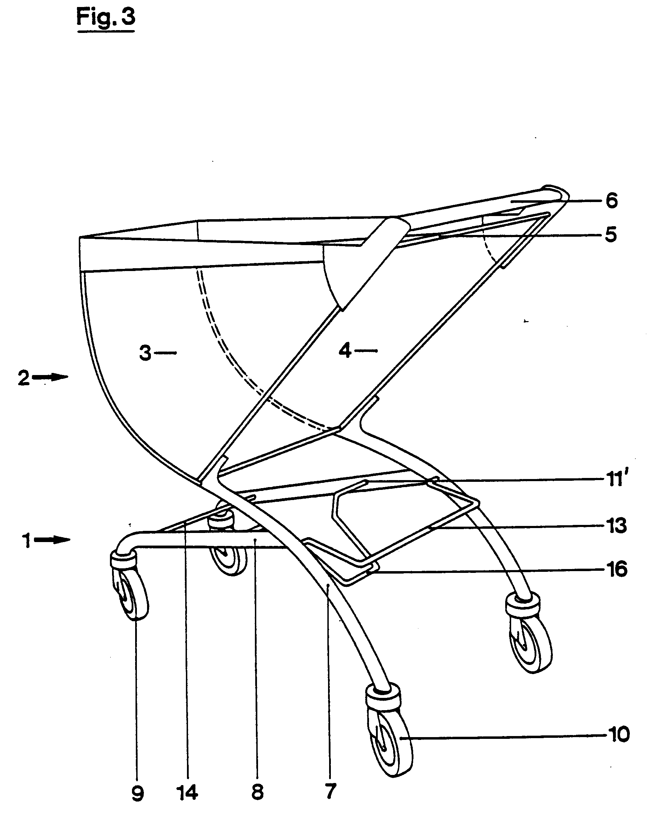

Gemäß Fig. 3 ist die Auflage der Kistenablage in der Weise ausgestaltet, daß Querstrebe 11' gekröpft ausgebildet ist. Die Auskröpfung 16 verläuft zunächst im wesentlichen vertikal nach unten, um sich nach einer Abknickung schräg nach hinten, unten zu erstrecken. Im übrigen entspricht der Einkaufswagen gemäß Fig. 3 demjenigen gemäß Fig. 1, so daß auf die entsprechenden Erläuterungen verwiesen werden kann.

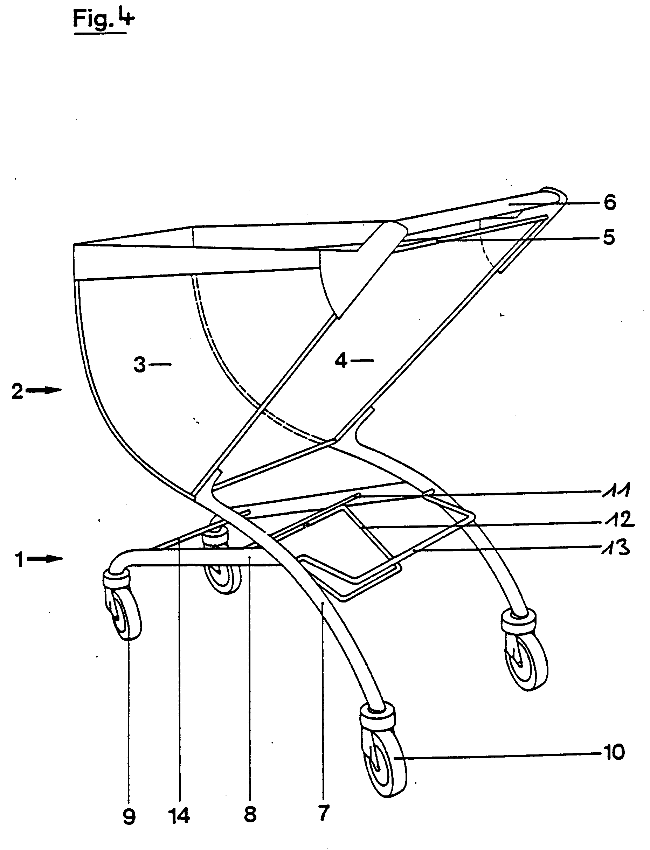

Der Einkaufswagen gemäß Fig. 4 unterscheidet sich von demjenigen gemäß Fig. 1 dadurch, daß der ebene Auflagerahmen 12 offen ausgebildet ist. Er ist zudem nicht oben auf die Querstrebe 11 aufgesetzt, sondern vielmehr unterhalb dieser mit ihr verbunden.

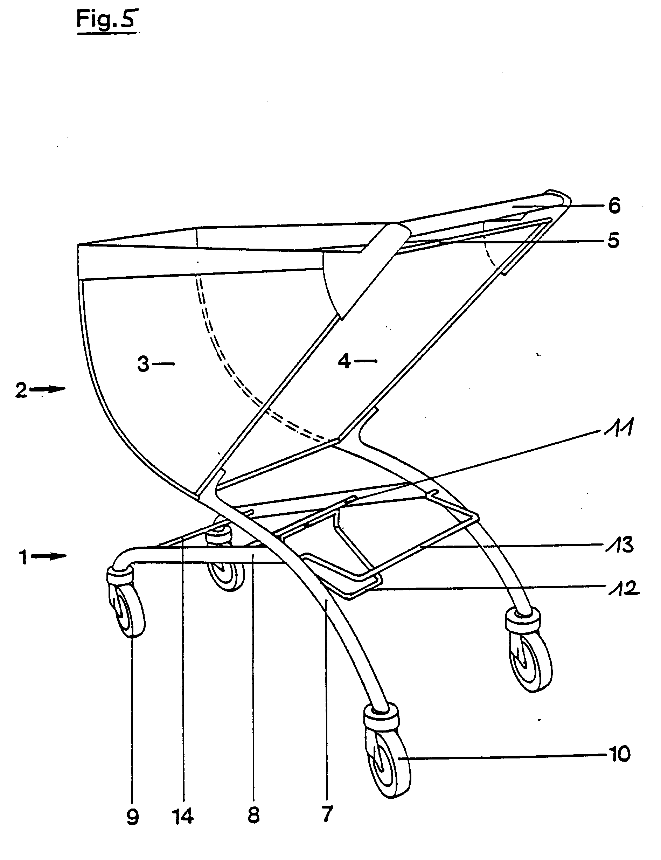

Bei dem Einkaufswagen gemäß Fig. 5 ist der Auflagerahmen 12 ebenfalls offen ausgebildet und unterhalb der Querstrebe 11 mit dieser verbunden. Anders als bei dem Einkaufswagen gemäß Fig. 4 ist der Auflagerahmen 12 jedoch nicht eben, sondern vielmehr gekröpft ausgebildet. Er erstreckt sich benachbart der Querstrebe 11 zunächst im wesentlichen vertikal nach unten und erst nach einer Abknickung schräg nach hinten-unten.

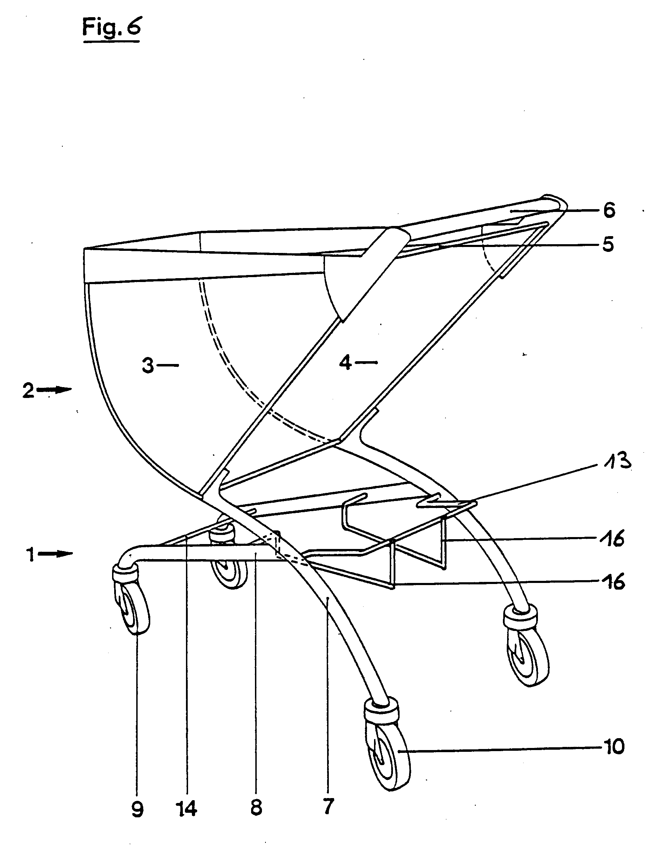

Der Einkaufswagen gemäß Fig. 6 weist keine die Vorderholme 8 des Fahrgestells miteinander verbindende Querstrebe auf. Als vorderes Halteelement dienen zwei Bügelsegmente 16, deren vordere Enden etwa in der Mitte des Fahrgestells mit den Vorderholmen 8 und deren hintere Enden mit dem gekröpften, als Anlage für die Kiste dienenden Bügel 13 fest verbunden sind. Die mittleren Abschnitte der Bügelsegmente 16 sind schräg nach unten-hinten geneigt; auf ihnen steht der Boden einer in die Kistenablage eingesetzten Kiste auf. Um das Stapeln mehrerer Einkaufswagen nicht zu behindern, ist der Abstand zwischen den hinteren, mit dem Bügel 13 verbundenen Abschnitten der Bügelsegmente 16 geringer als der Abstand zwischen den Bügelsegmenten in ihrem vorderen Bereich; die mittleren Abschnitte der beiden Bügelsegmente 16, auf denen die Kiste aufsteht, konvergieren somit nach hinten gegeneinander.

## Patentansprüche

1. Einkaufswagen mit einem Fahrgestell (1) und einem hierauf aufgesetzten Warenbehälter (2), wobei im hinteren Bereich des Einkaufswagens eine Kistenablage vorgesehen ist, welche zwei feststehende, in Längsrichtung versetzt angeordnete Halteelemente (11; 13) für eine Kiste umfaßt, von denen das vordere (11) als Auflage für den Boden und das hintere (13) als Anlage für mindestens eine Wand einer aufzunehmenden Kiste dient, wobei eine Kiste schräg nach hinten geneigt von oben in die Kistenablage einsetzbar ist und eine in der Kistenablage aufgenommene Kiste eine schräg nach hinten geneigte Stellung einnimmt,
dadurch gekennzeichnet,
daß das hintere Halteelement als die Längsseiten des Fahrgestells (7, 8) verbindender, nach hinten ausgekröpfter Bügel (13) ausgebildet ist, welcher als Anlage für die beiden seitlichen und die hintere Wand der Kiste dient.

2. Einkaufswagen nach Anspruch 1,
dadurch gekennzeichnet,
daß das vordere Halteelement eine die beiden Längsseiten des Fahrgestells verbindende Querstrebe (11, 11') umfaßt.

3. Einkaufswagen nach Anspruch 2,
dadurch gekennzeichnet,
daß die Querstrebe (11) sich gerade zwischen den beiden Längsseiten des Fahrgestells erstreckt, wobei mit ihr ein Auflagerahmen (12) verbunden ist, der zumindest bereichsweise schräg nach hinten, unten geneigt ist.

4. Einkaufswagen nach Anspruch 2,
dadurch gekennzeichnet,
daß die Querstrebe (11) sich gerade zwischen den beiden Längsseiten des Fahrgestells erstreckt, wobei mit ihr ein Bügel (15) verbunden ist, der zunächst im wesentlichen vertikal nach unten und nach einer Abknickung in einer schräg nach hinten, unten geneigten Ebene verläuft.

5. Einkaufswagen nach Anspruch 2,
dadurch gekennzeichnet,
daß die Querstrebe (11') gekröpft ausgebildet ist mit einer schräg nach unten, hinten vorspringenden Auskröpfung (16).

6. Einkaufswagen nach einem der Ansprüche 3 bis 5,
dadurch gekennzeichnet,
daß der Auflagerahmen (12), der Bügel (15) bzw. die Auskröpfung (16) sich zumindest bereichsweise in einer Ebene erstreckt, welche im wesentlichen senkrecht zu der durch die Rückwand (4) des Warenbehälters (2) definierten Ebene verläuft.

7. Einkaufswagen nach Anspruch 1,
dadurch gekennzeichnet,
daß das vordere Halteelement zwei getrennte, jeweils an einer Längsseite des Fahrgestells angeordnete Halteelementsegmente (16) umfaßt.

8. Einkaufswagen nach Anspruch 2,
dadurch gekennzeichnet,
daß jede Längsseite des Fahrgestells einen schräg nach vorne, oben verlaufenden Hinterholm (7) und einen schräg nach vorne, unten verlaufenden Vorderholm (8) umfaßt, wobei die Querstrebe (11) die beiden Vorderholme (8) und der Bügel (13) die beiden Hinterholme (7) miteinander verbindet.

9. Einkaufswagen nach Anspruch 8,
dadurch gekennzeichnet,
daß die Querstrebe (11) im wesentlichen in der Mitte des Fahrgestells (1) angeordnet ist.

## Claims

1. Shopping trolley with a chassis (1) and a goods container (2) superimposed thereon, in the rear region of the shopping trolley a box support being provided, which comprises two stationary holding members (11, 13) for a box, which members are staggered in the longitudinal direction and whereof the front (11) serves as a support for the base and the rear (13) serves as an abutment for at least one wall of a box to be received, a box, inclined obliquely rearwards, being able to be inserted from above in the box support and a box received in the box support adopting a position inclined obliquely rearwards, characterised in that the rear holding member is constructed as a bracket (13) bent rearwards and connecting the longitudinal sides of the chassis (7, 8), which bracket serves as an abutment for the two side walls and the rear wall of the box.

2. Shopping trolley according to Claim 1, characterised in that the front holding member comprises a transverse strut (11, 11') connecting the two longitudinal sides of the chassis.

3. Shopping trolley according to Claim 2, characterised in that the transverse strut (11) extends in a straight line between the two longitudinal sides of the chassis, a support frame (12) being connected thereto, which at least in regions is inclined obliquely rearwards in a downwards direction.

4. Shopping trolley according to Claim 2, characterised in that the transverse strut (11) extends in a straight line between the two longitudinal sides of the chassis, a bracket (15) being connected thereto, which first of all extends essentially vertically downwards and after a bend extends in a plane inclined downwards and obliquely rearwards.

5. Shopping trolley according to Claim 2, characterised in that the transverse strut (11') is bent with a bend (16) projecting obliquely downwards and rearwards.

6. Shopping trolley according to one of Claims 3 to 5, characterised in that the support frame (12), the bracket (15) or the bend (16) extends at least in regions in a plane which extends substantially at right angles to the plane defined by the rear wall (4) of the goods container (2).

7. Shopping trolley according to Claim 1, characterised in that the front holding member comprises two separate holding member segments (16) respectively located on one longitudinal side of the chassis.

8. Shopping trolley according to Claim 2, characterised in that each longitudinal side of the chassis comprises a rear spar (7) extending obliquely forwards and upwards and a front spar (8) extending obliquely forwards and downwards, the transverse strut (11) connecting the two front spars (8) and the bracket (13) connecting the two rear spars (7) to each other.

9. Shopping trolley according to Claim 8, characterised in that the transverse strut (11) is located substantially in the centre of the chassis (1).

## Revendications

1. Chariot pour achats, comportant un châssis mobile (1) et un récipient à marchandises (2) disposé sur ce châssis, et dans lequel dans la partie arrière du chariot pour achats est prévu un support pour une caisse, qui comprend deux éléments fixes (11;13) servant à retenir une caisse, qui sont disposés en étant décalés dans la direction longitudinale et parmi lesquels l'élément avant (11) est agencé en tant qu'appui pour le fond d'une caisse à installer et dont l'élément arrière (13) sert d'élément de butée pour au moins une paroi de cette caisse, une caisse pouvant être insérée en position oblique vers l'arrière en étant inclinée à partir du haut dans le support pour la caisse, et une caisse disposée sur l'appui de support pour une caisse prenant une position inclinée obliquement vers l'arrière, caractérisé en ce que l'élément arrière de retenue est agencé sous la forme d'un étrier (13) qui est coudé vers l'arrière et relie les côtés longitudinaux du châssis mobile (7,8) et qui est utilisé en tant que butée pour les deux parois latérales et la paroi arrière de la caisse.

2. Chariot pour achats selon la revendication 1, caractérisé en ce que l'élément avant de retenue comprend une traverse (11,11') qui relie les deux côtés longitudinaux du châssis mobile.

3. Chariot pour achats selon la revendication 2, caractérisé en ce que la traverse (11) s'étend précisément entre les deux côtés longitudinaux du châssis mobile, et à cette traverse est relié un cadre d'appui (12), qui, au moins par endroits, est incliné obliquement vers l'arrière et vers le bas.

4. Chariot pour achats selon la revendication 2, caractérisé en ce que la traverse (11) s'étend précisément entre les deux côtés longitudinaux du châssis mobile, qu'à cette traverse est relié un étrier (15) qui s'étend tout d'abord essentiellement verticalement vers le bas et, après un coude, s'étend dans un plan oblique vers l'arrière incliné vers le bas.

5. Chariot pour achats selon la revendication 2, caractérisé en ce que la traverse (11') est réalisée avec une forme coudée et comporte un coude (16) qui est disposé en saillie obliquement vers le bas et vers l'arrière.

6. Chariot pour achats selon l'une des revendications 3 à 5, caractérisé en ce que le cadre d'appui (12), l'étrier (15) ou le coude (16) s'étend au moins par endroits dans un plan, qui est essentiellement perpendiculaire au plan défini par la paroi arrière (4) du récipient à marchandises (2).

7. Chariot pour achats selon la revendication 1, caractérisé en ce que l'élément avant de retenue comprend deux segments séparés (16), qui sont disposés respectivement sur un côté longitudinal du châssis mobile.

8. Chariot pour achats selon la revendication 2, caractérisé en ce que chaque côté longitudinal du châssis mobile comprend un montant arrière (7) qui s'étend obliquement vers l'avant et vers le haut, et un montant avant (8) qui s'étend obliquement vers l'avant et vers le bas, la traverse (11) reliant entre eux les deux montants avant (8) tandis que l'étrier (13) relie entre eux les deux montants arrière (7).

9. Chariot pour achats selon la revendication 8, caractérisé en ce que la traverse (11) est disposée essentiellement au centre du châssis mobile (1).
